# EUROPÄISCHE PATENTSCHRIFT

(11) **EP 2 883 788 B1**
(45) Veröffentlichungstag und Bekanntmachung des Hinweises auf die Patenterteilung: **10.10.2018**
(21) Anmeldenummer: 14167023.2
(22) Anmeldetag: 05.05.2014
(51) Int. Cl.: B64C 11/40

(54) **Propellereinheit mit Regler**
Propeller unit with controller
Hélice avec régulateur

(30) Priorität: 02.12.2013 DE 102013113303; 04.04.2014 EP 14163478
(43) Veröffentlichungstag der Anmeldung: 17.06.2015
(73) Patentinhaber: MT-Propeller Entwicklung GmbH, 94348 Atting (DE)
(72) Erfinder: Albrecht, Martin, 94315 Straubing (DE); Mühlbauer, Gerd, 94360 Mitterfels (DE)
(74) Vertreter: advotec.

(56) Entgegenhaltungen:
- US-A- 4 946 354
- US-A- 5 997 250
- US-A1- 2011 140 690

## Beschreibung

Die Erfindung betrifft eine hydraulische Verstellpropellereinheit für ein Luft-, Land- oder Wasserfahrzeug, umfassend die Merkmale des Oberbegriffs des Patentanspruches 1.

Eine derartigere Verstellpropellereinheit ist aus der Praxis bekannt und umfasst einen Propeller mit mindestens zwei Propellerblättern, die im Bereich einer Propellernabe gelagert sind und deren Anstellwinkel mittels einer in der Propellernabe angeordneten Kolbeneinheit verstellbar sind. Die Kolbeneinheit ist von einem Druckraum begrenzt, in dem ein Regeldruck einstellbar ist, in Abhängigkeit von dem der Anstellwinkel der Propellerblätter eingestellt wird. Zur Einstellung des Regeldrucks ist der Druckraum mit einer Versorgungsleitung eines Propellerreglers verbunden. Ferner ist es bekannt, die Verstellpropellereinheit in einem Umkehrschubbetrieb, in einem Normalbetrieb und in einem Segelbetrieb zu betreiben. In dem Segelbetrieb nehmen die Propellerblätter eine Segelstellung ein, in der die Ebene der Propellerblätter zumindest weitgehend rechtwinklig zur Flugrichtung angestellt ist. In der Umkehrschubstellung sind die Propellerblätter mittels der Kolbeneinheit soweit verstellt, dass bei gleichbleibender Drehrichtung des Propellers eine Bremskraft auf das betreffende Fahrzeug ausgeübt wird.

Es ist erforderlich, das Propellersystem derart abzusichern, dass im Flugbetrieb des betreffenden Flugzeugs die Umkehrschubstellung der Propellerblätter nicht einstellbar ist.

Aus der Druckschrift US 5,997,250 ist eine Vorrichtung zur Einstellung eines Anstellwinkels von Blättern eines Flugzeugpropellers bekannt. Die Einstellung erfolgt in Abhängigkeit von einer Reihe von Parametern.

Der Erfindung liegt die Aufgabe zugrunde, eine gemäß der einleitend genannten Gattung ausgebildete hydraulische Verstellpropellereinheit zu schaffen, die ohne mechanische Verbindung zwischen dem Propeller und dem Propellerregler auskommt, so dass die Einstellung der verschiedenen Betriebsmodi durch eine Steuereinheit des betreffenden Fahrzeugs auf elektronischem Wege erfolgen kann.

Diese Aufgabe ist erfindungsgemäß durch die hydraulische Verstellpropellereinheit mit den Merkmalen des Patentanspruches 1 gelöst.

Gemäß der Erfindung wird also eine hydraulische Verstellpropellereinheit für ein Luft-, Land- oder Wasserfahrzeug vorgeschlagen, die einen Propeller mit mindestens zwei Propellerblättern umfasst, die im Bereich einer Propellernabe gelagert sind und hinsichtlich ihres Anstellwinkels mittels einer hydraulisch angetriebenen Kolbeneinheit verstellbar sind. An die Kolbeneinheit grenzt ein Druckraum, in dem ein Regeldruck herrscht, der mittels eines Propellerreglers einstellbar ist, dessen Versorgungsleitung mit dem Druckraum in Verbindung steht. Der Anstellwinkel der Propellerblätter ist mittels der Kolbeneinheit zwischen einer Segelstellung und einer maximalen Umkehrschubstellung verstellbar. Der Propeller ist in einem Umkehrschubbetrieb, in einem Segelbetrieb und einem Normalbetrieb betreibbar. Um eine mechanische Verbindung zwischen dem Propellerregler und dem Propeller entbehrlich zu machen, ist in der Umkehrschubstellung der Anstellwinkel der Propellerblätter mittels mindestens eines berührungslos arbeitenden Abstandssensors messbar. Der Propellerregler kann in Abhängigkeit von dem Anstellwinkel, der mittels des Abstandssensors gemessen ist, den Regeldruck in dem Druckraum einstellen.

Bei der hydraulischen Verstellpropellereinheit nach der Erfindung ist also nur eine hydraulische Verbindung zwischen dem Propellerregler und dem Propeller erforderlich. Wenn die Abstandssensoren dem Propeller selbst zugeordnet sind, ist zusätzlich eine elektronische Verbindung zwischen dem Propeller und dem Propellerregler erforderlich. Dies ist beispielsweise der Fall, wenn die Abstandssensoren mittels eines üblichen Beta-Kohle-Schleifring-Systems betätigt werden.

Um in dem Normalbetrieb bzw. im Flugbetrieb eines Flugzeugs sicherzustellen, dass die Propellerblätter keine Umkehrschubstellung annehmen, weist die Kolbeneinheit bei einer bevorzugten Ausführungsform der hydraulischen Verstellpropellereinheit nach der Erfindung einen ersten Kolben und einen konzentrisch zu dem ersten Kolben angeordneten, zweiten Kolben auf, der in Abhängigkeit von der Drehzahl des Propellers über eine Drehzahlverriegelung mit dem ersten Kolben koppelbar ist und der mit einem mechanischen Anschlag zusammenwirkt, der in dem Normalbetrieb einen minimalen Anstellwinkel der Propellerblätter definiert. Der minimale Anstellwinkel entspricht der Startstellung der Propellerblätter. Die Drehzahlverriegelung kann von einem Ring gebildet sein, der in einer Nut an der Umfangswand des ersten, vorzugsweise inneren Kolbens angeordnet ist und der sich ab einer bestimmten Drehzahl aufweitet und in eine Innennut des zweiten, vorzugsweise außen angeordneten Kolbens eingreift. Im gekoppelten Zustand kann die Kolbeneinheit nur bis an den mechanischen Anschlag verfahren werden. Im ungekoppelten Zustand wird der erste Kolben bei Änderung des Regeldrucks in dem Druckraum alleine verfahren. Hierbei kann auch eine Stellung angefahren werden, in der die Propellerblätter ihre Umkehrschubstellung annehmen. Die Umkehrschubstellung kann also nur unterhalb einer bestimmten Grenzdrehzahl des Propellers eingestellt werden.

Der Anschlag, mit dem vorzugsweise der zweite Kolben der Kolbeneinheit zusammenwirkt, kann von einer einstellbaren Stange gebildet sein. Die Stange erstreckt sich zweckmäßigerweise bezogen auf die Drehachse des Propellers in axialer Richtung. Diese Richtung entspricht auch der Verfahrrichtung der Kolbeneinheit.

Um insbesondere im Umkehrschubbetrieb den Anstellwinkel der Propellerblätter erfassen zu können, wirkt bei einer bevorzugten Ausführungsform der hydraulischen Propellereinheit nach der Erfindung die Kolbeneinheit über mindestens eine Mitnehmereinrichtung auf mindestens zwei Blattwinkelpositionsstangen, in Abhängigkeit von deren Stellung der Abstandssensor den Anstellwinkel der Propellerblätter misst. Die Mitnehmereinrichtung bewirkt einen axialen Versatz der Blattwinkelpositionsstangen, aus dem wiederum der Anstellwinkel der Propellerblätter ermittelbar ist.

Um die in einem Propeller herrschenden Bedingungen möglichst sachgerecht zu berücksichtigen, sind die Blattwinkelpositionsstangen bei einer bevorzugten Ausführungsform mit einem Winkelmessring verbunden, der konzentrisch zur Achse des Propellers angeordnet ist und dessen axiale Stellung der Abstandssensor erfasst. Der Blattwinkelmessring spannt also bezogen auf die Achse des Propellers eine Radialebene auf. Die Abstandssensoren können dann die Lage der Blattwinkelpositionsstange unabhängig von der Drehstellung des Propellers bzw. der Blattwinkelpositionsstange erfassen.

Vorzugsweise sind die Blattwinkelpositionsstangen jeweils mittels einer Rückstellfeder in Richtung einer Grundstellung vorgespannt.

Um zu gewährleisten, dass die Blattwinkelpositionsstangen und die Kolbeneinheit nur ab einem bestimmten Anstellwinkel der Propellerblätter zusammenwirken, können die Blattwinkelpositionsstangen jeweils einen vorzugsweise einstellbaren Anschlag für die Mitnehmereinrichtung der Kolbeneinheit aufweisen. Der Anschlag ist beispielsweise aus einer Stoppmutter oder dergleichen gebildet. Die Mitnehmereinrichtung kann ein Gabelstück oder dergleichen sein, das die jeweilige Blattwinkelpositionsstange zumindest teilweise umgreift und bei dem bestimmten Anstellwinkel an dem jeweiligen Anschlag anschlägt.

Der Abstandssensor kann in den Propellerregler integriert sein oder karosseriefest in dem betreffenden Fahrzeug bzw. Flugzeug angeordnet sein. Zweckmäßigerweise sind mindestens zwei derartige Abstandssensoren vorgesehen. Wie oben bereits erwähnt, sind die Abstandssensoren im Falle einer Ansteuerung über ein übliches Beta-Kohle-Schleifring-System dem Propeller und nicht dem Propellerregler zuzuordnen.

Um den Umkehrschubbetrieb einstellen zu können, hat bei einer speziellen Ausführungsform der Verstellpropellereinheit nach der Erfindung der Propellerregler einen Hydraulik-Hochdruckkreis und einen Hydraulik-Niederdruckkreis, wobei im Umkehrschubbetrieb ein Hochdruckventil den Hydraulik-Hochdruckkreis mit der Versorgungsleitung für den Druckraum verbindet, wohingegen die Versorgungsleitung in dem Segelbetrieb bzw. der Segelstellung und in dem Normalbetrieb bzw. der Normstellung/- betrieb mit dem Hydraulik-Niederdruckkreis verbunden ist.

Zweckmäßigerweise ist innerhalb des Propellerreglers in der Versorgungsleitung in dem Druckraum mindestens ein Magnetventil angeordnet, das den Regeldruck in dem Druckraum einstellt. Wenn das Magnetventil geschlossen wird, wird die Versorgungsleitung drucklos geschaltet, wodurch der Propeller seine Segelstellung annimmt.

Des Weiteren ist eine spezielle Ausführungsform des Propellerreglers durch ein Regelventil gekennzeichnet, das mittels einer elektrischen Verstelleinheit verstellbar ist und das einen Steuerdruck in der Versorgungsleitung vorgibt. Eine Aufteilung der Hydraulik in einen Niederdruckkreis und einen Hochdruckkreis ist dann nicht zwingend erforderlich.

Weitere Vorteile und vorteilhafte Ausgestaltungen des Gegenstandes der Erfindung sind der Beschreibung, der Zeichnung und den Patentansprüchen entnehmbar.

Ausführungsbeispiele einer hydraulischen Verstellpropellereinheit nach der Erfindung sind in der Zeichnung schematisch vereinfacht dargestellt und werden in der nachfolgenden Beschreibung näher erläutert.

Es zeigt:
- Fig. 1:: eine schematische Anordnung einer hydraulischen Verstellpropellereinheit nach der Erfindung;
- Fig. 2:: einen Längsschnitt durch einen Propellernabenbereich eines Propellers der Verstellpropellereinheit nach Fig. 1;
- Fig. 3:: einen Propellerregler der Verstellpropellereinheit nach Fig. 1;
- Fig. 4:: einen Längsschnitt durch einen Propellernabenbereich eines Propellers einer alternativen Ausführungsform einer Verstellpropellereinheit nach der Erfindung;
- Fig. 5:: einen Propellerregler für den Propeller nach Fig. 4;
- Fig. 6:: eine alternative Ausführungsform eines Propellerreglers für den Propeller nach Fig. 4.

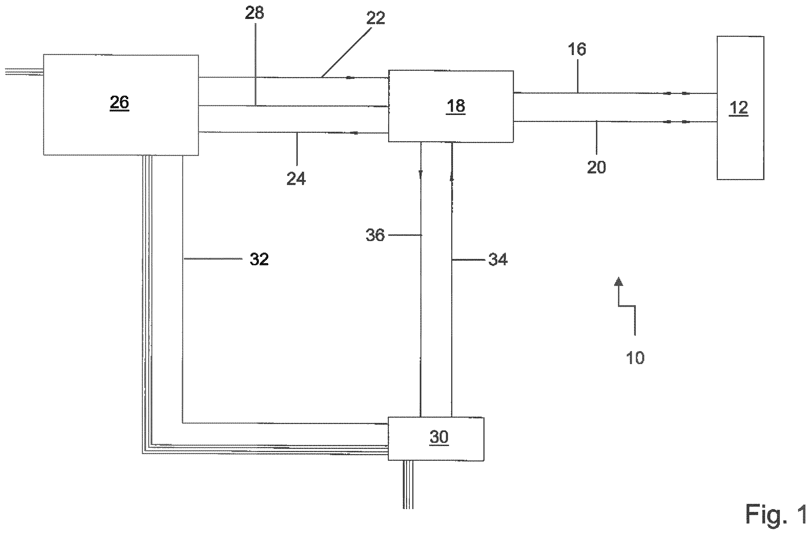

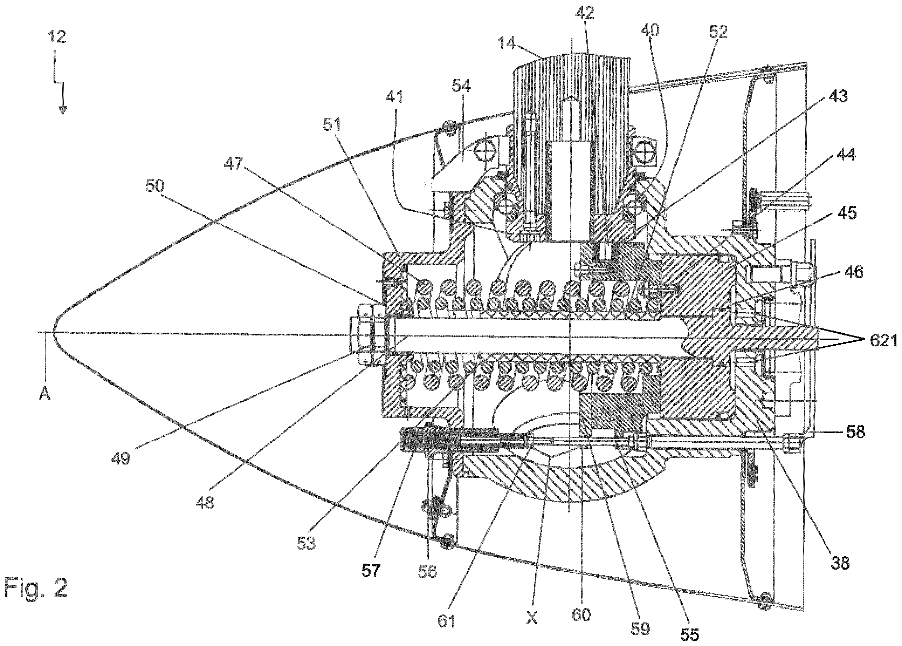

In Fig. 1 ist in stark schematisierter Weise ein Aufbau einer Antriebsanordnung 10 für ein Flugzeug dargestellt. Die Antriebsanordnung umfasst einen Propeller 12, der, wie Fig. 2 zu entnehmen ist, mit Propellerblättern 14 ausgestattet ist. Die Propellerblätter 14 sind hinsichtlich ihres Anstellwinkels zwischen einer Segelstellung und einer maximalen Umkehrschubstellung hydraulisch verstellbar. Hierzu ist der Propeller 12 über eine Versorgungsleitung 16 mit einem Propellerregler 18 verbunden, die eine Hydraulikleitung darstellt. Zur Messung des Anstellwinkels der Propellerblätter 14 ist der Propellerregler 18 mit berührungslos arbeitenden Abstandssensoren 31 versehen, die über einen Messweg 20 mit dem Propeller 12 zusammenwirken.

Der Propellerregler 18 ist wiederum über eine Speiseleitung 22 und eine Rücklaufleitung 24 mit einem triebwerksseitigen Antrieb 26 verbunden. Diese Leitungen dienen zur Zufuhr und zur Rückführung des zum Einstellen des Anstellwinkels der Propellerblätter 14 erforderlichen Hydrauliköls. Des Weiteren ist der triebwerksseitige Antrieb 26 mit einer Antriebswelle 28 versehen, mittels der die Propellerblätter 14 verdreht werden können.

Die Antriebsanordnung 10 umfasst des Weiteren eine Steuereinheit 30, die eine sogenannte FADEC (Full Authority Digital Engine Control) sein kann. Eine Steuerleitung 32 meldet der Steuereinheit 30 die aktuelle Motordrehzahl zurück, woraufhin die Steuereinheit 30 den jeweils erforderlichen Propellerblattanstellwinkel ermittelt bzw. die zur Einstellung desselben erforderlichen Steuersignale über eine Steuerleitung 34 an den Propellerregler 18 weitergibt. Zudem ist der Propellerregler 18 über eine Signalleitung 36 mit der Steuereinheit 30 verbunden, sodass der Anstellwinkel der Propellerblätter 14 der Steuereinheit 30 zur Verfügung gestellt werden kann. Die FADEC 30 erhält also die Triebwerksdrehzahl über die Steuerleitung 32 und gibt jeweils nur Steuersignale an den Propellerregler 18 weiter, welcher den Propeller 12 ansteuert und somit die Triebwerksdrehzahl regelt.

Der Propeller 12 umfasst eine Propellernabe 38, an welcher die Propellerblätter 14 zur Einstellung des Anstellwinkels über Blattlager 40 verdrehbar gelagert sind. Die Propellerblätter 14 haben jeweils einen Propellerblattfuß 41, an dessen radial nach innen weisenden Stirnseite ein Verstellzapfen 42 ausgebildet ist, der in eine korrespondierende Ausnehmung eines verfahrbaren Gleitsteins 43 eingreift, der über eine Schraube 44 an einer Kolbeneinheit 45 befestigt ist, die aus einem einzigen, ringförmigen Kolben besteht und an einen Druckraum 46 grenzt, in dem ein Regeldruck zum Verstellen des Anstellwinkels der Propellerblätter 14 einstellbar ist.

Die Kolbeneinheit 45 ist mittels einer Rückstellfederanordnung in Richtung der in Fig. 2 dargestellten Stellung vorgespannt, die der Segelstellung der Propellerblätter 14 zugeordnet ist. Die von Druckfedern gebildete Rückstellfederanordnung 47 umgreift eine zentrale Führungsstange 48, die die Kolbeneinheit 45 durchgreift und zusammen mit dieser verschiebbar ist. Stirnseitig ist die Führungsstange 48 mit Anschlagmuttern 49 versehen, von denen die innen liegende in der Segelstellung an einem entsprechenden Anschlag 50 eines Gehäuses 51 der Propellernabe 38 anliegt.

Die Führungsstange 48 ist von einer Buchse 52 umschlossen, das mit einer Stirnseite durch die Kraft der Rückstellfederanordnung 47 gegen die Kolbeneinheit 45 gedrückt ist und mit seiner zweiten Stirnseite 53 einen Anschlag für einen maximalen Blattwinkel in einer Umkehrschubstellung der Propellerblätter 14 definiert.

Im Flugbetrieb wird zudem durch Fliehgewichte 54 ein Verstellmoment auf die Propellerblätter 14 ausgeübt, das in Richtung der Segelstellung wirkt.

Zur Messung des Anstellwinkels der Propellerblätter 14 in einem Umkehrschubbetrieb weist der Propeller 12 mehrere in axialer Richtung ausgerichtete Blattwinkelpositionsstangen 55 auf, die jeweils in einem Federgehäuse 56 verschiebbar gelagert ist und jeweils mittels einer in dem Federgehäuse 56 angeordneten Rückstellfeder 57 in Richtung einer in Fig. 2 dargestellten Ruhestellung vorgespannt sind und von denen stellvertretend eine dargestellt ist. Die jeweilige Blattwinkelpositionsstange 55 ist an seiner der Rückstellfeder 57 abgewandten Seite mit einem Blattwinkelmessring 58 versehen, der bezüglich der Achse A des Propellers konzentrisch angeordnet ist und über dessen axiale Stellung im Umkehrschubbetrieb der Anstellwinkel der Propellerblätter 14 ermittelbar ist.

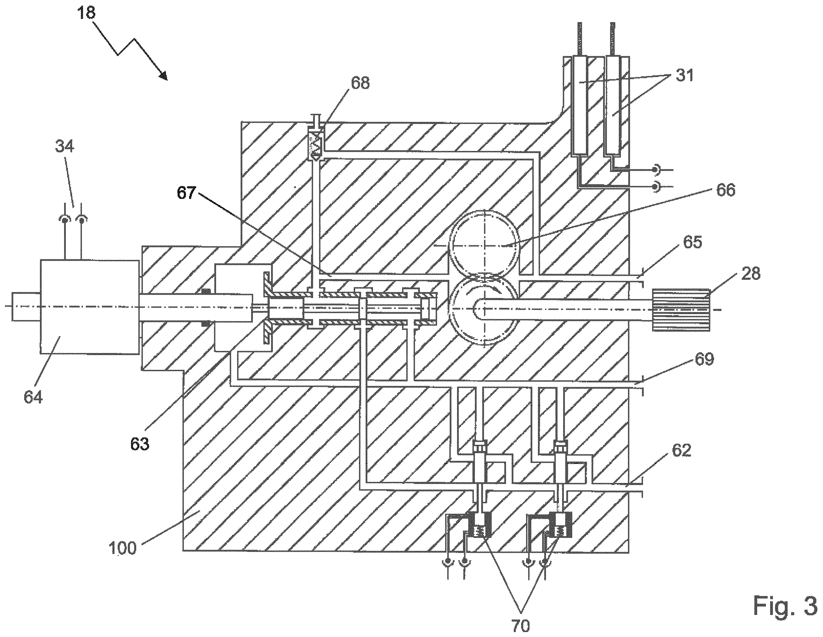

Zum Verschieben der Blattwinkelpositionsstange 55 in der Umkehrschubstellung der Propellerblätter 14 ist mit dem Gleitstein 43, welcher mit der Kolbeneinheit 45 verbunden ist, eine Frontplatte 59 verschraubt, die mit einem Gabelstück 60 die Blattwinkelpositionsstange 55 zumindest teilweise umgreift. In der Segelstellung der Propellerblätter 14 hat das Gabelstück 60 der Frontplatte 59 einen Abstand X von einer einen Anschlag bildenden Stoppmutter 61, die auf die Blattwinkelpositionsstange 55 aufgebracht ist. Die Stoppmutter 61 definiert einen Anschlag für die Kolbeneinheit 45, der in einem Normalflugbetrieb dem kleinstmöglichen Anstellwinkel der Propellerblätter 14 zugeordnet ist. Wird ausgehend von dieser Anschlagstellung die Kolbeneinheit 45 weiter verfahren, wodurch die Blattwinkelpositionsstange 55 gegen die Kraft der Rückstellfeder 57 verschoben wird, liegt eine Umkehrschubstellung der Propellerblätter 14 vor, wobei der zugeordnete Anstellwinkel der Propellerblätter 14 über die zwei berührungslos arbeitenden Abstandssensoren 31 messbar ist, die an dem in Fig. 3 dargestellten Propellerregler 18 angeordnet sind und die Position des Blattwinkelmessrings 58 erfassen.

Der Druckraum 46, der an die Kolbeneinheit 45 grenzt, ist über Bohrungen 621 der Propellernabe 38 mit der Versorgungsleitung 16 und damit mit einer Versorgungsleitung 62 des in Fig. 3 dargestellten Propellerreglers 18 verbunden.

Der Propellerregler 18 weist ein Reglergehäuse 100 auf, in dem ein Hydraulikleitungssystem ausgebildet ist. Insbesondere umfasst das Hydraulikleitungssystem die Versorgungsleitung 62, die über die Versorgungsleitung 16 zu dem Druckraum 46 des Propellers 12 führt. Die Versorgungsleitung 62 ist mit einem Regelventil 63 verbunden. Das Regelventil 63 hat einen Ventilschieber, der mittels einer elektrischen Verstelleinheit 64, die einen sogenannten Torque-Motor darstellt, betätigbar ist. Der Torque-Motor 64 ist über die Steuerleitung 34 mit der Steuereinheit 30 der Antriebsanordnung 10 verbunden (vgl. Fig. 1). Mittels des Ventils 63 wird ein Basisdruck eingestellt, der in der Versorgungsleitung 62 zur Einstellung des Anstellwinkels der Propellerblätter 14 bereitgestellt wird.

Des Weiteren umfasst der Propellerregler 18 eine Hydraulikölzufuhrleitung 65, mittels der eine mechanische Pumpe 66 gespeist wird, welche wiederum über eine Leitung 67 den von der Pumpe 66 erzeugten Hydraulikdruck zu dem Ventil 63 führt und welche sich über ein Untersetzungsgetriebe mit dem Triebwerk mitdreht.

Zum Schutz vor einem Überdruck weist der Propellerregler 18 ein Überdruckventil 68 auf. Das Überdruckventil 68 dient dazu, dass der maximale System-Regelduck limitiert wird.

Um überflüssiges Hydrauliköl in einen Hydraulikölsumpf zurückführen zu können, ist der Propellerregler 18 des Weiteren mit einer Rückflussleitung 69 versehen, die zu dem Rücklauf 24 führt, der mit dem Triebwerk 26 verbunden ist.

Um die Versorgungsleitung 62, die über die Leitung 16 mit dem Propeller 12 verbunden ist, drucklos schalten zu können, sind zwei hintereinander angeordnete Magnetventile 70 vorgesehen, die ebenfalls mit der Steuereinheit 30 verbunden sind.

Um ein ungewolltes Verstellen der Propellerblätter 14 in eine Umkehrschubstellung zu verhindern, besteht bei dem in Fig. 3 dargestellten Propellerregler 18 eine dreifache Absicherung. Zum einen muss das Regelventil 63, das von dem Torque-Motor 64 gesteuert ist, welcher wiederum von der Steuereinheit 30 Steuersignale erhält, die Kolbeneinheit 45 des Propellers 12 und damit die Propellerblätter 14 in Richtung der Umkehrschub-/Reverse-Stellung durch Freigabe des Ölflusses bewegen. Auch kann mittels des Ventils 63 der Öldruck abgelassen werden, so dass sich die Propellerblätter 14 aufgrund der Wirkung der Rückstellfederanordnung 47 und der Fliehgewichte 54 in ihre Segelstellung verstellen. Zudem kann bei einer Fehlfunktion des Ventils 63 die Versorgungsleitung 62 durch die beiden unabhängig voneinander gesteuerten Magnetventile 70 drucklos geschaltet werden, so dass sich die Propellerblätter 14 in ihre Segelstellung verstellen.

Die Sicherheit des Propellerreglers 18 erhöht sich durch das doppelt vorhandene Magnetventil 70 dahingehend, dass der Ausfall eines der beiden Ventile 70 im Notfallmodus in unbetätigter Stellung nicht zu einem Einfrieren des Blattwinkels führt. Der Ausfall eines der beiden Ventile in unbetätigter Stellung beeinträchtigt den Berieb des Propellers 12 nicht. Fällt eines der beiden Magnetventile 70 in betätigter Stellung aus, verstellen sich die Propellerblätter 14 in jedem Fall in ihre Segelstellung.

Die Steuerung der Anstellwinkel der Propellerblätter 14 im Umkehrschubbetrieb erfolgt durch Messung des Anstellwinkels mittels der berührungslos arbeitenden Abstandssensoren bzw. Positionssensoren 31. Diese sind elektrisch mit der Steuereinheit 30 verbunden, welche wiederum die Signale der Abstandssensoren 31 verarbeitet und die elektrische Verstelleinheit 64 entsprechend steuert.

Die Fehlerrate bzw. Ausfallwahrscheinlichkeit der elektrischen Ansteuerung 64 muss so festgelegt werden, dass die geforderten Kriterien erfüllt werden. Hierzu ist die elektrische Verstelleinheit 64 mit einer mehrfachen elektrischen Ansteuerung versehen.

Durch die vorstehend beschriebene Konstruktion ist es möglich, im Umkehrschubbetrieb den Anstellwinkel der Propellerblätter 14 ohne mechanische Verbindung zu messen und dadurch in diesem Modus die benötigte Leistungseinstellung zu regeln. Die Ventile des Propellerreglers 18 verhindern, dass sich die Propellerblätter 14 in ungewollter Weise in ihre Umkehrschubstellung verstellen, was insbesondere im Flug zu fatalen Folgen führen könnte. Nach einer Landung des betreffenden Flugzeugs gibt die Steuereinheit 30 den Umkehrschubbetrieb frei. Mittels der Blattwinkelpositionsstange 55, die mit dem Blattwinkelmessring 58 verbunden ist, kann der Umkehrschub/Reverse über eine Messung des Anstellwinkels der Propellerblätter 14 leistungsmäßig geregelt werden. Hierbei schlägt die Frontplatte 59 bzw. das Gabelstück 60, die bzw. das mit der Kolbeneinheit 45 verbunden ist, an der Stoppmutter 61 der Blattwinkelpositionsstange 55 an. Die Einstellung der jeweiligen Anstellwinkel, die am Boden, d.h. im Umkehrschub- bzw. Reverse-Betrieb erreicht werden können, erfolgt durch ständige Messung des Anstellwinkels durch die Abstandssensoren 31, die die Position des Blattwinkelmessrings 58 erfassen, und durch elektronische Ansteuerung des Propellerreglers 18.

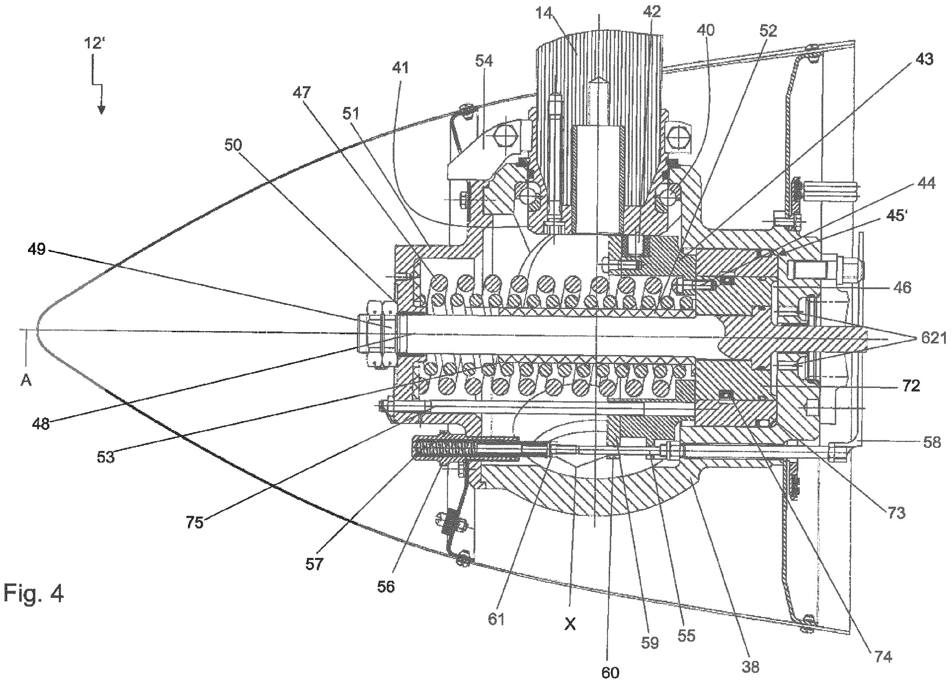

In Fig. 4 ist eine alternative Ausführungsform eines Propellers 12' einer hydraulischen Verstellpropellereinheit nach der Erfindung dargestellt. Der Propeller 12' unterscheidet sich von dem in Fig. 2 dargestellten Propeller dadurch, dass er eine Kolbeneinheit 45' aufweist, die als Doppelkolben ausgebildet und einen ersten, innen liegenden Kolben 72 und einen zweiten, außen liegenden Kolben 73 umfasst, der konzentrisch zu dem ersten Kolben 72 an dessen Umfang angeordnet ist. Die beiden Kolben 72 und 73 sind im Normalflugbetrieb des betreffenden Flugzeugs durch eine drehzahlabhängig arbeitende Drehzahlverriegelung 74 miteinander gekoppelt. Durch eine sich in axiale Richtung in der Propellernabe erstreckende Anschlagstange 75, die mit dem außen liegenden, zweiten Kolben 73 zusammenwirkt, ist der Verstellweg der Kolbeneinheit 45' bei gekoppelten Kolben 72 und 73 im Normalflugbetrieb begrenzt, so dass keine Umkehrschubstellung der Propellerblätter 14 eingestellt werden kann. Der minimale Blattwinkel, der im Flug erreicht werden kann, ist also mechanisch begrenzt.

Nach der Landung des Flugzeugs und einer Verringerung der Drehzahl des Propellers 12 gibt die Drehzahlverriegelung 74 den innen liegenden Kolben 72 gegenüber dem außen liegenden Kolben 73 frei. Entsprechend der Ausführungsform nach Fig. 2 kann sich dann der innen liegende Kolben 72 zusammen mit einem Gleitstein 43 und der Frontplatte 59, an der das Gabelstück 60 ausgebildet ist, in die Umkehrschubstellung bewegen. Mittels der Blattwinkelpositionsstange 55, die mit dem Blattwinkelmessring 58 verbunden ist, kann der Umkehrschub/Reverse entsprechend der oben beschriebenen Ausführungsform über eine Blattwinkelmessung leistungsmäßig geregelt werden. Hierbei schlägt die Frontplatte 59 bzw. das Gabelstück 60, die bzw. das mit dem innen liegenden Kolben 72 verbunden ist, an der Stoppmutter 61 der Blattwinkelpositionsstange 55 an.

Im Übrigen entspricht der Propeller nach Fig. 4 dem Propeller nach Fig. 2. Es wird daher auf die diesbezügliche Beschreibung verwiesen. Bezugszeichen gleicher Bauelemente entsprechen einander.

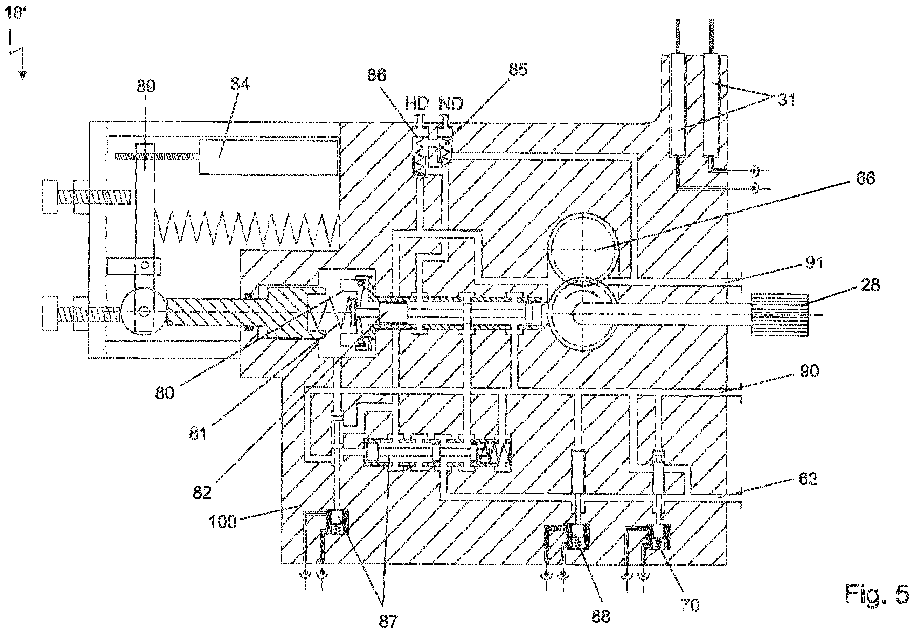

Ein Propellerregler 18', mit dem der Propeller 12' nach Fig. 4 verbunden sein kann, ist in Fig. 5 dargestellt. Der Propellerregler 18' unterscheidet sich von dem Propellerregler nach Fig. 3 dadurch, dass er einen Konstantdrehzahlbereich (constant-speed Bereich) aufweist, der über Fliehgewichte 80 drehzahlabhängig geregelt wird. Mittels des Konstantdrehzahlbereichs wird Hydrauliköl, das mittels einer internen mechanischen Pumpe 66 bereitgestellt wird, die sich über ein Untersetzungsgetriebe mit dem Propeller 12'/Triebwerk 26 mitdreht, auf den benötigten Regeldruck aufbereitet, der über die Versorgungsleitung 62 dem Propeller 12' zugeführt wird, in dem der Doppelkolben 72, 73 mit dem Regeldruck beaufschlagt wird.

Der Konstantdrehzahlbereich, der in üblicher Weise mit den Fliehgewichten 80, einer Vorspannfeder 81 und einem Ventilschieber 82 versehen ist, wird mittels eines Elektromotors 84 und eine mechanische Wippe 89 geregelt.

Der Propellerregler 18' hat einen Niederdruckkreis ND, der mit einem Niederdruckventil 85 versehen ist, und einen Hochdruckkreis HD, der mit einem Hochdruckventil 86 versehen ist.

Im Normalbetrieb und im Segelbetrieb erfolgt die Versorgung der Versorgungsleitung 62 über den Niederdruckkreis. Im Umkehrschubbetrieb erfolgt die Versorgung der Versorgungsleitung 62 über den Hochdruckkreis, und zwar durch entsprechende Freigabe mittels eines Hochdruckventils 87.

Der Propellerregler 18' umfasst zwei berührungslos arbeitende Abstandssensoren 31, die die axiale Position des Blattwinkelmessrings 58 messen, in deren Abhängigkeit mittels eines Magnetventils 88, das getaktet betrieben wird und mit welchem die Abstandssensoren 31 über die FADEC 30 elektrisch verbunden sind, der minimale im Flug mögliche Blattwinkel geregelt wird. Im Notfallmodus kann ein Magnetventil 70 angesteuert werden, welches bei Aktivierung die Versorgungsleitung 62 drucklos schaltet, so dass ein Umkehrschub verhindert wird und die Propellerblätter 14 in ihre Segelstellung verfahren, beispielsweise wenn das Ventil 88 nicht korrekt arbeitet.

Nach der Landung des betreffenden Flugzeugs gibt das Hochdruckventil 87 den Hochdruck frei, mittels welchem der Umkehrschub (Reverse) geregelt werden kann. Die entsprechenden Drücke werden mittels des Hochdruckventils 86 und des Niederdruckventils 85 gesteuert.

Die berührungslos erfolgende Messung des Anstellwinkels der Propellerblätter 14 mittels der Abstandssensoren 31, die die Stellung des Blattwinkelmessrings 58 erfassen, schaltet das Ventil 88 an, wenn der Hochdruck mittels des Ventils 87 freigegeben ist und sich das betreffende Flugzeug im Flugbetrieb befindet, wodurch ein Umkehrschub verhindert wird.

Bei einem gewünschten Umkehrschub (Reverse) wird das Ventil 88 deaktiviert, bis die berührungslos arbeitenden Abstandssensoren 31 den Anstellwinkel der Propellerblätter 14 messen, um diese in ihre Umkehrschubstellung zu fahren. Somit wird abhängig von der Blattwinkelmessung Öldruck zu dem Propeller befördert, um den Umkehrschub auch bei Betätigung des Ventils 88 zu regeln. Im Notfallmodus kann diese Funktion durch das Magnetventil 70 übernommen werden.

Im Umkehrschubbetrieb wird die Triebwerksleistung über die Blattwinkelpositionsstange 55 geregelt, die den Blattwinkelmessring 58 bei der in der Zeichnung dargestellten Anordnung nach links zieht, wobei die Position des Winkelmessrings 58 mit den beiden Abstandssensoren 31 gemessen wird.

In Abhängigkeit von der Stellung des Blattwinkelmessrings 58 werden die Ventile 88 und 70 aktiviert oder deaktiviert. Somit wird ohne Unterbrechung der Umkehrschub über den Anstellwinkel der Propellerblätter 14 geregelt, da der innen liegende Kolben 72 der Kolbeneinheit 45' über das Gabelstück 60 direkt mit der Blattwinkelpositionsstange 55 verbunden ist. Ein Umkehrschub ist also nur möglich, wenn das Hochdruckventil 87 den Hochdruckkreis freigibt und das Ventil 88 auf Durchfluss geschaltet ist.

Falls sich das Ventil 88 nicht aktivieren lässt, um ein ungewolltes Verfahren in die Umkehrschubstellung zu verhindern, kann als dritte Absicherung das ein Segelstellungsventil darstellende Magnetventil 70 die Funktion des Ventils 88 übernehmen und den Umkehrschub durch Verfahren der Propellerblätter 14 in ihre Segelstellung verhindern.

Das Magnetventil 70 dient also sowohl zur Notfallsteuerung des Blattwinkels im Reverse-Modus oder des minimalen Blattwinkels im Flug, als auch zum Verfahren in Segelstellung beim Abschalten des den Propeller 12' umfassenden Triebwerks. Zudem dient das Magnetventil 70 im Notfall auch bei einer Fehlfunktion der Ventile 87 und 88 zum Verfahren der Propellerblätter 14 in ihre Segelstellung.

Es ist mithin ein komplett elektronisch/elektrisch geregeltes Umkehrschub-/Reverse-System realisiert, und zwar ohne jegliche mechanische Verbindung zu Leistungshebeln des betreffenden Flugzeugs und ohne mechanische Verbindung zwischen dem Propeller 12' und dem Propellerregler 18'.

Wie bereits oben erwähnt, erfolgt die Verbindung zwischen dem Propellerregler 18' und dem Propeller 12' über die Leitung 62. Mit der Versorgungsleitung 62 (Propellerservo) wird der Regeldruck zum Propeller gebracht, wodurch die beiden Kolben 72 und 73 mit Druck beaufschlagt werden. Die Leitung 91 stellt der Pumpe 66 das Hydrauliköl vom Triebwerk zur Verfügung. Die Leitung 90 ermöglicht das Abfließen von Hydrauliköl zum Öltank bzw. -sumpf.

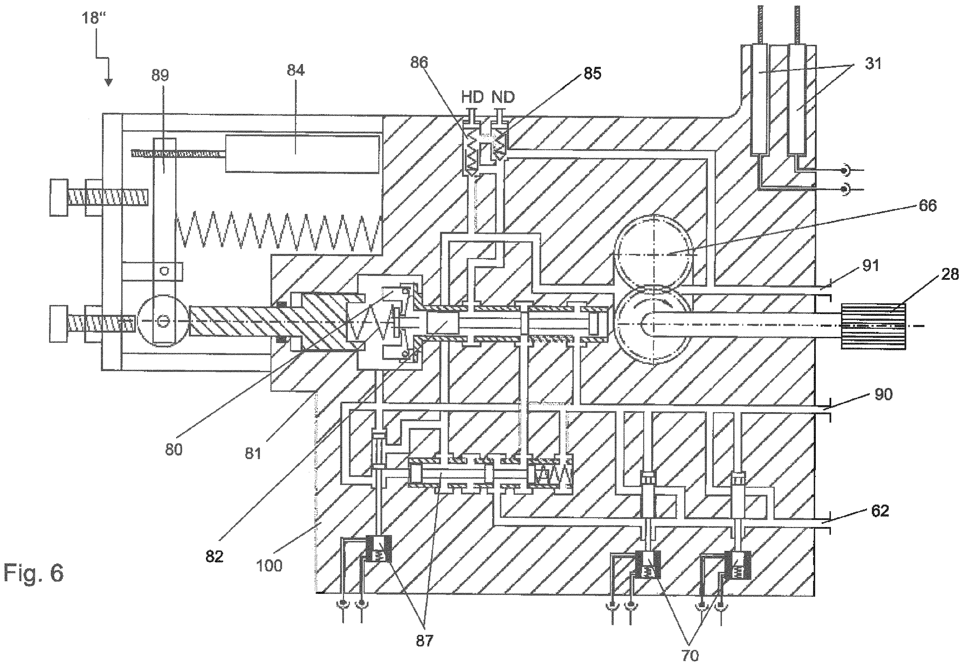

In Fig. 6 ist ein weiterer Propellerregler 18" dargestellt, der weitgehend dem Propellerregler nach Fig. 5 entspricht, sich von diesem aber dadurch unterscheidet, dass er anstelle des Ventils 88 ein zweites Ventil 70 aufweist, das bei Ausfall des ersten Ventils 70 dessen Funktion ersetzt.

Auch bei diesem Propellerregler 18" besteht eine dreifache Absicherung gegen ein ungewolltes Verfahren bzw. Verstellen der Propellerblätter 14 in ihre Umkehrschubstellung. Zum einen muss das Ventil 87 einen erhöhten Regeldruck freischalten und zusätzlich kann bei einer Fehlfunktion des Ventils 87 der Propeller von zwei unabhängig voneinander angesteuerten Ventilen 70 in seine Segelstellung verfahren werden.

Die Sicherheit des Propellerreglers 18" erhöht sich dahingehend, dass das Magnetventil 70 doppelt vorhanden ist und der Ausfall eines der beiden Magnetventile 70 in seiner unbetätigten Stellung nicht zu einem Einfrieren des Blattwinkels bzw. des Anstellwinkels der Propellerblätter 14 fuhrt. Der Ausfall eines der beiden Magnetventile 70 beeinträchtigt also den Betrieb des Propellers nicht. Fällt hingegen eines der beiden Ventile 70 in betätigter Stellung aus, fährt der Propeller in jedem Fall in seine Segelstellung.

Im Übrigen entspricht der Propellerregler nach Fig. 6 dem Propellerregler nach Fig. 5. Es wird daher auf die diesbezügliche Beschreibung verwiesen. Bezugszeichen gleicher Bauelemente entsprechen einander.

### Bezugszeichenliste

- 10: Antriebsanordnung
- 12: Propeller
- 14: Propellerblatt
- 16: Versorgungsleitung
- 18: Propellerregler
- 20: Messweg
- 22: Speiseleitung
- 24: Rücklauf
- 26: Triebwerk
- 28: Antriebswelle
- 30: Steuereinheit
- 31: Abstandssensoren
- 32: Steuerleitung
- 34: Steuerleitung
- 36: Signalleitung
- 38: Propellernabe
- 40: Blattlager
- 41: Propellerblattfuß
- 42: Verstellzapfen
- 43: Gleitstein
- 44: Schraube
- 45: Kolbeneinheit
- 46: Druckraum
- 47: Rückstellfederanordnung
- 48: Führungsstange
- 49: Anschlagmutter
- 50: Anschlag
- 51: Frontplatte
- 52: Buchse
- 53: Stirnseite
- 54: Fliehgewichte
- 55: Blattwinkelpositionsstange
- 56: Federgehäuse
- 57: Rückstellfeder
- 58: Blattwinkelmessring
- 59: Frontplatte
- 60: Gabelstück
- 61: Stoppmutter
- 62: Versorgungsleitung
- 63: Regelventil
- 64: elektrische Verstelleinheit
- 65: Hydraulikölzufuhrleitung (hydraulische Ölversorgung vom Triebwerk)
- 66: mechanische Pumpe
- 67: Leitung
- 68: Überdruckventil
- 69: Rücklaufleitung
- 70: Magnetventil
- 72: erster Kolben
- 73: zweiter Kolben
- 74: Drehzahlverriegelung
- 75: Anschlagstange
- 80: Fliehgewicht
- 81: Vorspannfeder
- 82: Ventilschieber
- 84: Elektromotor
- 85: Niederdruckventil
- 86: Hochdruckventil
- 87: Hochdruckventil (magnetomechanisches Ventil)
- 88: Magnetventil
- 89: Wippe
- 90: Rücklaufleitung
- 91: Leitung (hydraulische Ölversorgung vom Triebwerk)
- 100: Reglergehäuse
- 621: Bohrungen

## Patentansprüche

1. Hydraulische Verstellpropellereinheit für ein Luft-, Land- oder Wasserfahrzeug, umfassend einen Propeller mit mindestens zwei Propellerblättern (14), die im Bereich einer Propellernabe (38) gelagert sind und hinsichtlich ihres Anstellwinkels mittels einer hydraulisch angetriebenen Kolbeneinheit (45) zwischen einer Segelstellung und einer maximalen Umkehrschubstellung verstellbar sind, an die ein Druckraum (46) grenzt, in dem ein Regeldruck einstellbar ist und der mit einer Versorgungsleitung (62) eines Propellerregler (18) verbunden ist, wobei der Verstellpropeller (12) in einem Umkehrschubbetrieb, in einem Segelbetrieb und in einem Normalbetrieb betreibbar ist, **dadurch gekennzeichnet, dass** in der Umkehrschubstellung der Anstellwinkel der Propellerblätter (14) mittels mindestens eines berührungslos arbeitenden Abstandssensors (31) messbar ist und der Propellerregler (18) in Abhängigkeit von dem Anstellwinkel, der mittels des Abstandssensors (31) gemessen ist, den Regeldruck in dem Druckraum (46) einstellt.

2. Hydraulische Verstellpropellereinheit nach Anspruch 1, **dadurch gekennzeichnet, dass** die Kolbeneinheit (45) einen ersten Kolben (72) und einen konzentrisch zu dem ersten Kolben (72) angeordneten, zweiten Kolben (73) umfasst, der in Abhängigkeit von der Drehzahl des Propellers (12) über eine Drehzahlverriegelung (74) mit dem ersten Kolben (72) koppelbar ist und der mit einem Anschlag (75) zusammenwirkt, der in dem Normalbetrieb einen minimalen Anstellwinkel der Propellerblätter (14) definiert.

3. Hydraulische Verstellpropellereinheit nach Anspruch 2, **dadurch gekennzeichnet, dass** der Anschlag (75) von einer einstellbaren Stange gebildet ist.

4. Hydraulische Verstellpropellereinheit nach einem der Ansprüche 1 bis 3, **dadurch gekennzeichnet, dass** die Kolbeneinheit (45) über eine Mitnehmereinrichtung auf eine Blattwinkelpositionssstange (55) wirkt, in Abhängigkeit von deren Stellung der Abstandssensor (31) den Anstellwinkel der Propellerblätter (14) misst.

5. Hydraulische Verstellpropellereinheit nach Anspruch 4, **dadurch gekennzeichnet, dass** die Blattwinkelpositionssstange (55) mit einem Blattwinkelmessring (58) verbunden ist, der konzentrisch zur Achse des Propellers angeordnet ist und dessen Stellung der Abstandssensor (31) erfasst.

6. Hydraulische Verstellpropellereinheit nach Anspruch 4 oder 5, **dadurch gekennzeichnet, dass** die Blattwinkelpositionssstange (55) mittels einer Rückstellfeder (57) in Richtung einer Grundstellung vorgespannt ist.

7. Hydraulische Verstellpropellereinheit nach einem der Ansprüche 4 bis 6, **dadurch gekennzeichnet, dass** die Blattwinkelpositionssstange (55) einen Anschlag für die Mitnehmereinrichtung der Kolbeneinheit (45) hat.

8. Hydraulische Verstellpropellereinheit nach einem der Ansprüche 1 bis 7, **dadurch gekennzeichnet, dass** der Propellerregler (18) den mindestens einen Abstandssensor (31) umfasst.

9. Hydraulische Verstellpropellereinheit nach einem der Ansprüche 1 bis 8, **dadurch gekennzeichnet, dass** der Propellerregler (18', 18") einen Hydraulik-Hochdruckkreis (HD) und einen Hydraulik-Niederdruckkreis (ND) umfasst und im Umkehrschubbetrieb ein Hochdruckventil (86) den Hydraulik-Hochdruckkreis (HD) mit der Versorgungsleitung (62) für den Druckraum (46) verbindet, wobei die Versorgungsleitung (62) in dem Segelbetrieb und dem Normalbetrieb mit dem Hydraulik-Niederdruckkreis (ND) verbunden ist.

10. Hydraulische Verstellpropellereinheit nach einem der Ansprüche 1 bis 9, **dadurch gekennzeichnet, dass** innerhalb des Propellerreglers (18) in der Versorgungsleitung (62) für den Druckraum (46) mindestens ein Magnetventil (70) angeordnet ist, das den Regeldruck in dem Druckraum (46) einstellt.

## Claims

1. A hydraulic variable pitch propeller for an air, land or water craft, comprising a propeller having at least two propeller blades (14) which are mounted in the area of a propeller hub (38) and whose pitch can be varied between a sailing position and a maximal reverse thrust position by means of a hydraulically powered piston assembly (45), against which a pressure chamber (46) abuts, in which a control pressure can be set and which is connected to a supply line (62) of a propeller controller (18), said variable pitch propeller (12) being able to be operated in a reverse mode, in a feathering mode, and in a standard mode, **characterized in that** in the reverse position, the pitch of the propeller blades (14) can be measured using at least one distance sensor (31) functioning in a contactless manner and the propeller controller (18) sets the control pressure in the pressure chamber (46) as a function of the pitch, which is measured using the distance sensor (31).

2. The hydraulic variable pitch propeller according to claim 1, **characterized in that** the piston assembly (45) comprises a first piston (72) and a second piston (73), which is arranged concentrically to the first piston (72), can be coupled to the first piston (72) via a rotation-speed locking mechanism (74) as a function of the rotation speed of the propeller (12), and interacts with an abutment (75) defining a minimal pitch of the propeller blades (14) in the standard operation.

3. The hydraulic variable pitch propeller according to claim 2, **characterized in that** the abutment (75) is formed by an adjustable rod.

4. The hydraulic variable pitch propeller according to any one of the claims 1 to 3, **characterized in that** the piston assembly (45) acts on a blade-angle positioning rod (55) via a driver device and the distance sensor (31) measures the pitch of the propeller blades (14) as a function of the position of the blade-angle positioning rod (55).

5. The hydraulic variable pitch propeller according to claim 4, **characterized in that** the blade-angle position rod (55) is connected to a blade-angle measuring ring (58), which is arranged concentrically to the axis of the propeller and whose position the distance sensor (31) detects.

6. The hydraulic variable pitch propeller according to claim 4 or 5, **characterized in that** the blade-angle positioning rod (55) is pretensioned towards a home position by means of a return spring (57).

7. The hydraulic variable pitch propeller according to any one of the claims 4 to 6, **characterized in that** the blade-angle positioning rod (55) has an abutment for the driver device of the piston assembly (45).

8. The hydraulic variable pitch propeller according to any one of the claims 1 to 7, **characterized in that** the propeller controller (18) has at least one distance sensor (31).

9. The hydraulic variable pitch propeller according to any one of the claims 1 to 8, **characterized in that** the propeller controller (18', 18") comprises a hydraulic high-pressure circuit (HD) and a hydraulic low-pressure circuit (ND), and in the reverse mode a high-pressure valve (86) connects the hydraulic high-pressure circuit (HD) to the supply line (62) for the pressure chamber (46), said supply line (62) being connected to the hydraulic low-pressure circuit (ND) when in the feathering mode and the standard mode.

10. The hydraulic variable pitch propeller according to any one of the claims 1 to 9, **characterized in that** within the propeller controller (18) at least one magnet valve (70), which adjusts the control pressure in the pressure chamber (46), is arranged in the supply line (62) for the pressure chamber (46).

## Revendications

1. Hélice à pas variable hydraulique pour un véhicule aérien, terrestre ou naval, comprenant une hélice comprenant au moins deux pales d'hélice (14) qui sont montées dans la région d'un moyeu d'hélice (38) et qui sont variables quant à leur angle d'incidence au moyen d'un ensemble de pistons (45) actionné hydrauliquement, contre lequel une chambre de pression (46) appuie, dans laquelle une pression de commande peut être ajustée et qui est relié à une conduite d'alimentation (62) d'un contrôleur d'hélice (18), ladite hélice à pas variable (12) pouvant être utilisée dans un mode d'inverseur, dans un mode de drapeau, et dans un mode standard, **caractérisée en ce que** dans la position d'inverseur, l'angle d'incidence des pales d'hélice (14) peut être mesuré en utilisant au moins un capteur de distance (31) fonctionnant dans une manière sans contact et le contrôleur d'hélice (18) ajuste la pression de commande dans la chambre de pression (46) en fonction de l'angle d'incidence, qui est mesuré en utilisant le capteur de distance (31).

2. Hélice à pas variable hydraulique selon la revendication 1, **caractérisée en ce que** l'ensemble de pistons (45) comprend un premier piston (72) et un deuxième piston (73), qui est disposé concentriquement au premier piston (72), peut être couplé au premier piston (72) par un mécanisme de verrouillage de la vitesse de rotation (74) en fonction de la vitesse de rotation de l'hélice (12) et interagit avec un appui (75) définissant un angle d'incidence minimal des pales d'hélice (14) dans la fonction standard.

3. Hélice à pas variable hydraulique selon la revendication 2, **caractérisée en ce que** l'appui (75) est formé par une tige ajustable.

4. Hélice à pas variable hydraulique selon l'une quelconque des revendications 1 à 3, **caractérisée en ce que** l'ensemble de pistons (45) agit sur une tige de positionnement d'angle de pales (55) par un dispositif d'entraînement et le capteur de distance (31) mesure l'angle d'incidence des pales d'hélice (14) en fonction de la position de la tige de positionnement d'angle de pales (55).

5. Hélice à pas variable hydraulique selon la revendication 4, **caractérisée en ce que** la tige de positionnement d'angle de pales (55) est reliée à une bague de mesure d'angle de pales (58), qui est disposée concentriquement à l'axe de l'hélice et dont position le capteur de distance (31) détecte.

6. Hélice à pas variable hydraulique selon la revendication 4 ou 5, **caractérisée en ce que** la tige de positionnement d'angle de pales (55) est précontrainte vers une position initiale au moyen d'un ressort de rappel (57).

7. Hélice à pas variable hydraulique selon l'une quelconque des revendications 4 à 6, **caractérisée en ce que** la tige de positionnement d'angle de pales (55) a un appui pour le dispositif d'entraînement de l'ensemble de pistons (45).

8. Hélice à pas variable hydraulique selon l'une quelconque des revendications 1 à 7, **caractérisée en ce que** le contrôleur d'hélice (18) a au moins un capteur de distance (31).

9. Hélice à pas variable hydraulique selon l'une quelconque des revendications 1 à 8, **caractérisée en ce que** le contrôleur d'hélice (18', 18") a un circuit de haute pression hydraulique (HD) et une circuit de basse pression hydraulique (ND), et dans le mode d'inverseur une vanne de haute pression (86) relie le circuit de haute pression hydraulique (HD) à la conduite d'alimentation (62) pour la chambre de pression (46), ladite conduite d'alimentation (62) étant reliée au circuit de basse pression hydraulique (ND) dans le mode de drapeau et dans le mode standard.

10. Hélice à pas variable hydraulique selon l'une quelconque des revendications 1 à 9, **caractérisée en ce que** dans le contrôleur d'hélice (18) au moins une électrovanne (70), qui ajuste la pression de commande dans la chambre de pression (46), est disposée dans la conduite d'alimentation (62) pour la chambre de pression (46).
